# EUROPEAN PATENT APPLICATION

(11) **EP 4 648 144 A1**
(43) Date of publication of application: **12.11.2025**
(21) Application number: 24780138.4
(22) Date of filing: 25.03.2024
(51) Int. Cl.: H01M 4/96, D04H 1/4242, D21H 13/50, H01M 4/88, H01M 8/00, H01M 8/10

(54) **CARBON FIBER SHEET, GAS DIFFUSION ELECTRODE BASE MATERIAL, FUEL CELL, AND METHOD FOR MANUFACTURING CARBON FIBER SHEET**

(30) Priority: 30.03.2023 JP 2023054728; 18.10.2023 JP 2023179233
(71) Applicant: Toray Industries, Inc., Tokyo 103-8666 (JP)
(72) Inventor: OTAKE Hiroaki, Otsu-shi, Shiga 520-8558 (JP); UTSUNOMIYA Masamichi, Otsu-shi, Shiga 520-8558 (JP)
(74) Representative: Prüfer & Partner mbB Patentanwälte · Rechtsanwälte
(86) International application number: PCT/JP2024/011611
(87) International publication number: WO 2024/204020

(57) **Abstract**

The present invention provides a carbon fiber sheet that exhibits high gas diffusibility even in a high current density region while suppressing dry up of an electrolyte membrane by high thermal conductivity. The present invention relates to a carbon fiber sheet including a binding agent containing at least a resin and a fibrous carbon, and a carbon fiber structure bound with the binding agent, wherein a content of the fibrous carbon is 25 mass% or more in 100 mass% of the carbon fiber sheet, and a pore size distribution of the carbon fiber sheet has a peak between a pore size of 0.3 µm and 1.0 µm and a peak between a pore size of 20 µm and 100 µm.

## Description

### TECHNICAL FIELD

The present invention relates to a carbon fiber sheet and a production method thereof suitably used for a fuel cell, particularly for an electrode of a polymer electrolyte fuel cell, and a gas diffusion electrode medium and a fuel cell using the same.

### BACKGROUND ART

An electrode used in a polymer electrolyte fuel cell is sandwiched between two bipolar plates and disposed therebetween in the polymer electrolyte fuel cell, and has a structure including an electrolyte membrane, catalyst layers formed on both the surfaces of the electrolyte membrane, and gas diffusion electrode medium formed outside the catalyst layers. As the performance required of the gas diffusion electrode medium, for example, there are gas diffusibility, electrical conductivity for collecting electricity generated in the catalyst layer, drainage performance for efficiently removing moisture generated on the surface of the catalyst layer, and thermal conductivity for releasing heat generated by reaction from the catalyst layer to the outside of the system.

The drainage performance of the gas diffusion electrode medium is particularly important in preventing a rapid voltage drop (flooding) in a high current density region where a large amount of water is generated. As means for improving the drainage performance, a carbon fiber sheet formed of carbon fibers subjected to a water repellent treatment is usually used to improve the water repellency. In addition, a gas diffusion electrode medium is designed in which pores having different sizes are formed in the gas diffusion electrode medium to control the pore size distribution so as to maintain a gas diffusion path even if water is retained in some pores.

In addition, a fuel cell used as a power source of an automobile is required to exhibit high power generation performance under a high temperature condition exceeding a cell temperature of 90°C in the future. At high temperatures, an electrolyte membrane is dried, which lowers the ion conductivity of the electrolyte membrane and is likely to reduce the power generation performance (this phenomenon is called dry up). Therefore, the gas diffusion electrode medium is required to have high thermal conductivity for releasing heat generated in the catalyst layer so that the electrolyte membrane does not have a high temperature.

Patent Document 1 achieves both gas diffusibility and drainage performance by adding fibrillated synthetic pulp to a carbon fiber sheet and thereby forming pores of 5 µm or more and less than 20 µm and pores of 20 µm or more and 50 µm or less.

Patent Document 2 improves gas diffusibility by forming pores having different sizes in a pulp-containing carbon fiber sheet by carbon fibers having a fiber length of 1 mm or more and short carbon fibers having a fiber length of less than 1 mm.

In order to ensure thermal conductivity, Patent Document 3 proposes a porous member containing vapor grown carbon fibers (VGCF) and supported only by conductive particles and a resin.

### PRIOR ART DOCUMENTS

### PATENT DOCUMENTS

Patent Document 1: Japanese Patent Laid-open Publication No. 2011-181511
Patent Document 2: Japanese Patent Laid-open Publication No. 2013-218951
Patent Document 3: International Publication No. 2010/050219

### SUMMARY OF THE INVENTION

### PROBLEMS TO BE SOLVED BY THE INVENTION

In Patent Document 1, high thermal conductivity cannot be obtained because pulp having a low graphitization degree is used. In addition, since the pores of 5 µm or more and less than 20 µm tend to retain produced water, and do not easily function as an effective gas diffusion path, voltage tends to decrease due to flooding in a high current density region. In Patent Document 2, PAN-based or pitch-based carbon milled fibers are added, but the thermal conductivity is not sufficient for suppressing dry up. In addition, the pores formed by the short carbon fibers have a size of about several µm, and do not effectively function as a gas diffusion path under a power generation condition in which a large amount of water is generated. In Patent Document 3, since the carbon fibers are not used as a skeleton, there are no pores having a size of 20 µm or more, and a drainage path having a sufficient size is not provided. Thus, there is the problem that flooding is likely to occur in a high current density region.

An object of the present invention is to provide a carbon fiber sheet that exhibits high gas diffusibility even in a high current density region while suppressing dry up of an electrolyte membrane by high thermal conductivity.

### SOLUTIONS TO THE PROBLEMS

The present inventors have invented a carbon fiber sheet that achieves both thermal conductivity and gas diffusibility by binding carbon fibers with a mixture containing fibrous carbon. The present invention for solving the above-mentioned problems is as follows.
(1) A carbon fiber sheet including a binding agent containing at least a resin and a fibrous carbon, and a carbon fiber structure bound with the binding agent, wherein
   a content of the fibrous carbon is 25 mass% or more in 100 mass% of the carbon fiber sheet, and
   a pore size distribution of the carbon fiber sheet has a peak between a pore size of 0.3 µm and 1.0 µm and a peak between a pore size of 20 µm and 100 µm.
(2) A carbon fiber sheet including a binding agent containing at least a resin and a fibrous carbon, and a carbon fiber structure bound with the binding agent, wherein
   a pore size distribution of the carbon fiber sheet has a peak between a pore size of 0.3 µm and 1.0 µm and a peak between a pore size of 20 µm and 100 µm, and
   a pore volume of the pore size of 0.3 µm to 1.0 µm is 0.40 mL/g or more.
(3) The carbon fiber sheet according to (1), wherein a pore volume of the pore size of 0.3 µm to 1.0 µm is 0.40 mL/g or more.
(4) The carbon fiber sheet according to any of (1) to (3), wherein a content of the resin is 5 mass% or more and 25 mass% or less in 100 mass% of the carbon fiber sheet.
(5) The carbon fiber sheet according to any of (1) to (4), wherein the content of the fibrous carbon is 40 mass% or more in 100 mass% of the carbon fiber sheet.
(6) The carbon fiber sheet according to any of (1) to (5), wherein the fibrous carbon has an aspect ratio of 10 or more and 400 or less.
(7) The carbon fiber sheet according to any of (1) to (6), wherein the fibrous carbon has a fiber diameter of 100 nm or more and 1 µm or less.
(8) The carbon fiber sheet according to any of (1) to (7), wherein an X-ray diffraction pattern has a peak having a half width of 0.3° or more and 1.0° or less in a range of 25° to 28°.
(9) The carbon fiber sheet according to any of (1) to (8), wherein a decrease in tensile stress when the carbon fiber sheet is further pulled by 0.2 mm after breakage is 1 N/cm or more and 6 N/cm or less.
(10) The carbon fiber sheet according to any of (1) to (9), wherein the carbon fiber structure is a carbon fiber paper material.
(11) The carbon fiber sheet according to any of (1) to (10), wherein the resin is a fluoropolymer.
(12) A gas diffusion electrode medium including the carbon fiber sheet according to any of (1) to (11) and a microporous layer formed on one surface of the carbon fiber sheet.
(13) A fuel cell including the carbon fiber sheet according to any of (1) to (11) as a gas diffusion electrode.
(14) A fuel cell including the gas diffusion electrode medium according to (12) as a gas diffusion electrode.
(15) Transportation equipment including the fuel cell according to (13) or (14) as a power source.
(16) A method for producing a carbon fiber sheet to produce the carbon fiber sheet according to any of (1) to (12), the method including: a step of impregnating a carbon fiber structure with a liquid composition containing a resin and a fibrous carbon serving as a binding agent; and a heat treatment step of melting the resin contained in the liquid composition with which the carbon fiber structure is impregnated in the impregnation step.

### EFFECTS OF THE INVENTION

Use of the carbon fiber sheet of the present invention as a gas diffusion electrode makes it possible to achieve both thermal conductivity and gas diffusibility and to obtain a polymer electrolyte fuel cell that exhibits high power generation performance under a high temperature environment or in a high current density region.

### EMBODIMENTS OF THE INVENTION

### <Carbon Fiber Sheet>

In the present invention, a carbon fiber sheet is particularly suitably used as a gas diffusion electrode medium of a polymer electrolyte fuel cell, and thus, hereinafter, the effect in the case of using the carbon fiber sheet as a gas diffusion electrode medium may be described as the effect in the case where the carbon fiber sheet takes a specific form. The term "carbon fiber sheet" is a structure having a porous structure composed of a network structure essentially composed of carbon fibers and voids between the carbon fibers. Specific examples of the carbon fiber sheet of the present invention include a carbon fiber sheet obtained by binding a carbon fiber structure such as a carbon fiber paper material, a woven fabric, and a nonwoven fabric with a binding agent. Among them, it is particularly preferable to use a carbon fiber paper material as the carbon fiber structure because of its excellent property of absorbing a dimensional change of an electrolyte membrane in the through-plane direction of the electrolyte membrane, that is, its excellent "spring property". Here, the term "carbon fiber paper material" refers to a structure in which carbon fibers are randomly dispersed in a two-dimensional plane.

The carbon fiber paper material can be produced with a wet papermaking method in which carbon fibers are dispersed in a liquid to produce a carbon fiber paper material, or a dry papermaking method in which carbon fibers are dispersed in the air to produce a carbon fiber paper material. The wet papermaking method is preferably used because of its excellent productivity. The carbon fiber paper material may be produced by mixing a carbon powder or organic fibers for papermaking in order to improve the electrical conductivity or the drainage performance of the gas diffusion electrode medium. In addition, to improve the morphology retention and the handleability, carbon fibers may be bound to each other with an organic polymer such as polyvinyl alcohol, polyvinyl acetate, polyacrylonitrile, or cellulose.

Examples of the carbon fibers constituting the carbon fiber sheet include polyacrylonitrile (PAN)-based, pitch-based, and rayon-based carbon fibers. Among them, PAN-based carbon fibers are preferably used because of their excellent mechanical strength.

The carbon fibers constituting the carbon fiber sheet preferably have an average diameter of monofilaments (hereinafter referred to as "carbon fiber diameter") within the range of 3 to 20 µm, more preferably within the range of 5 to 12 µm.When the carbon fiber diameter is 3 µm or more, more preferably 5 µm or more, the pore size becomes large, and the drainage performance is improved, so that flooding is easily suppressed. Meanwhile, when the carbon fiber diameter is 20 µm or less, more preferably 12 µm or less, thickness unevenness is reduced, so that the thickness of the carbon fiber sheet is easily controlled to fall within a preferred range as described below. Here, the carbon fiber diameter is an average value determined by taking a photograph of the carbon fibers with a microscope such as a scanning electron microscope (SEM) at a magnification of 1,000 times, randomly selecting 30 different monofilaments, and measuring their diameters.

In a case where the carbon fiber paper material is used as the carbon fiber structure, the carbon fibers constituting the carbon fiber paper material preferably have an average length of monofilaments (hereinafter referred to as "carbon fiber length") within the range of 3 to 20 mm, more preferably within the range of 5 to 15 mm. When the carbon fiber length is 3 mm or more, more preferably 5 mm or more, the carbon fiber sheet easily achieves excellent mechanical strength, electrical conductivity, and thermal conductivity. Meanwhile, when the carbon fiber length is 20 mm or less, more preferably 15 mm or less, the dispersibility of the carbon fibers in papermaking is improved, so that a uniform carbon fiber sheet can be easily obtained. A carbon fiber having the above-mentioned carbon fiber length can be obtained by a method of cutting a continuous carbon fiber into a desired length, or the like. The carbon fiber length is an average value determined by taking a photograph of the carbon fibers with a microscope such as SEM at a magnification of 50 times, randomly selecting 30 different monofilaments, and measuring their lengths.

The carbon fiber sheet preferably has a thickness of 50 to 230 µm, more preferably 70 to 180 µm. When the thickness of the carbon fiber sheet is 230 µm or less, more preferably 180 µm or less, the gas diffusibility is easily enhanced, and produced water is easily discharged. Furthermore, the size of a fuel cell as a whole is easily reduced. Meanwhile, when the thickness of the carbon fiber sheet is 50 µm or more, more preferably 70 µm or more, gas diffusion in the in-plane direction in the carbon fiber sheet is efficiently performed, and the power generation performance is easily improved.

The pore size distribution of the carbon fiber sheet of the present invention has at least two peaks between 0.3 µm and 1.0 µm and between 20 µm and 100 µm. Pores of 0.3 µm or more and 1.0 µm or less are formed by a binding agent containing at least a resin and a fibrous carbon, and function as a gas diffusion path without retaining produced water even under a power generation condition in which a large amount of produced water is generated during power generation, to effectively suppress flooding. In addition, the volume of the pores of 0.3 µm or more and 1.0 µm or less is preferably 0.40 mL/g or more. The volume is more preferably 0.50 mL/g or more and 1.5 mL/g or less. If the volume of the pores of 0.3 µm or more and 1.0 µm or less is less than 0.40 mL/g, flooding may occur due to a small number of gas diffusion paths. If the volume of the pores of 0.3 µm or more and 1.0 µm or less is more than 1.5 mL/g, the volume of pores having a pore size of 20 µm to 100 µm decreases, and the gas diffusibility tends to decrease. The pores of 20 µm or more and 100 µm or less are derived from pores formed by the carbon fibers bound with the binding agent and serve as a main gas diffusion path and a discharge path of produced water. The pore size distribution can be measured by pore measurement with a mercury porosimeter using, for example, AutoPore 9520 manufactured by Shimadzu Corporation.

A decrease in tensile stress when the carbon fiber sheet of the present invention is further pulled by 0.2 mm after breakage is preferably 1 N/cm or more and 6 N/cm or less, more preferably 1 N/cm or more and 4 N/cm or less. When the decrease in tensile stress is 6 N/cm or less per 0.2 mm, the decrease in tensile stress immediately after breakage is small in the event of breakage of the carbon fiber sheet with an excessive tensile stress applied to the carbon fiber sheet in a subsequent step using the carbon fiber sheet, for example, in a step of preparing a membrane electrode assembly. Thus, it is easy to perform step recovery. The decrease in tensile stress immediately after breakage of the carbon fiber sheet is preferably as small as possible. For the carbon fiber paper material, it is not easy to set the decrease in tensile stress to less than 1 N/cm per 0.2 mm, and thus the lower limit is about 1 N/cm per 0.2 mm. The decrease in tensile stress immediately after breakage of the carbon fiber sheet can be controlled by the type or amount of the resin used as the binding agent. The decrease in tensile stress when the carbon fiber sheet is further pulled by 0.2 mm after breakage can be determined by measuring a difference between a tensile stress at a breaking point and a tensile stress after further pulling the carbon fiber sheet by 0.2 mm immediately after breakage by a tensile test using, for example, "Autograph" (registered trademark) manufactured by Shimadzu Corporation. The tensile stress is calculated by dividing a tensile force by the width of a test piece.

As the binding agent for binding the carbon fibers of the carbon fiber sheet of the present invention to each other, a mixture containing at least the resin and the fibrous carbon is used. In a structure in which the carbon fibers are bound with the binding agent containing the resin and the fibrous carbon, the pores of 0.3 µm or more and 1.0 µm or less are likely to be formed in the binding agent. In a case where the carbon fibers are bound with a binding agent containing only the resin, and the fibrous carbon is contained in the carbon fiber sheet but is not present in the binding agent, the binding agent often does not have pores, and the binding agent spreading in a webbed form inhibits gas diffusion. In addition, since the fibrous carbon is superior in thermal conductivity to the resin, the fibrous carbon present in the binding agent functions as a thermal conductive path, to improve the thermal conductivity of the entire carbon fiber sheet. Whether or not the structure is formed by binding the carbon fibers with the binding agent containing the resin and the fibrous carbon can be checked by magnifying and photographing a binding agent portion formed in a webbed shape at an intersection of the carbon fibers by SEM or the like, and determining whether or not pores are formed by the fibrous carbon and the resin in the binding agent.

As the resin contained in the binding agent, a resin carbide or a non-carbonized resin can be used, but a non-carbonized resin as a main component is preferable. By using a non-carbonized resin, a high-temperature treatment step under an inert atmosphere becomes unnecessary, and the production cost can be greatly reduced. As the resin, a phenol resin, an epoxy resin, a fluoropolymer, and the like are preferably used, and among them, a fluoropolymer is more preferably used. As the fluoropolymer, polytetrafluoroethylene (PTFE), a tetrafluoroethylene-hexafluoropropylene copolymer (FEP), or a tetrafluoroethylene-perfluoroalkyl vinyl ether copolymer (PFA) can be used. PTFE or FEP is more preferably used because of its high water repellency. By mixing PTFE or FEP with the fibrous carbon, pores having a water-repellent surface are formed, and water is less likely to be retained in the pores, so that a carbon fiber sheet having high drainage performance is obtained. By using a non-carbonized phenol resin, epoxy resin, or fluoropolymer as the resin, the carbon fiber sheet becomes soft, and winding into a roll becomes easy. In addition, the decrease in tensile stress when the carbon fiber sheet is further pulled by 0.2 mm after breakage can be 6 N/cm or less. Furthermore, the absence of a thermosetting resin in the binding agent provides an advantage that the carbon fibers are easily separated/collected for reuse from the carbon fiber sheet after a burn-out treatment of the binding agent.

Use of the fluoropolymer as the resin contained in the binding agent can be determined by observation with SEM-EDX. When the shape of the binding agent for binding the carbon fibers observed with SEM matches the shape obtained by mapping the F element by EDX of the same field of view, it can be determined that the fluoropolymer is used as the binding agent.

The carbon fiber sheet of the present invention preferably contains 5 mass% or more of the resin in 100 mass% of the carbon fiber sheet. As the upper limit, the carbon fiber sheet preferably contains 25 mass% or less of the resin in 100 mass% of the carbon fiber sheet. When 5 mass% or more of the resin is contained in the carbon fiber sheet, the mechanical strength of the carbon fiber sheet increases, and the risk of breakage in the production process can be reduced. When the resin is 25 mass% or less in the carbon fiber sheet, the percentage of the material that inhibits electrical conduction in the carbon fiber sheet decreases, and both the mechanical strength and the electrical conductivity of the carbon fiber sheet can be achieved.

As the fibrous carbon contained in the binding agent, carbon nanofibers are preferably used because of their high thermal conductivity and having a shape to easily form the pores of 0.3 µm or more and 1.0 µm or less. The fibrous carbon has a role as a thermal conductive path, and the fibrous carbon with a higher graphitization degree has better thermal conductivity. The graphitization degree can be evaluated by an X-ray diffraction pattern, and a peak with a smaller half width has a higher graphitization degree. Therefore, the X-ray diffraction pattern of the carbon fiber sheet preferably has a peak having a half width of 0.3° or more and 1.0° or less in the range of 25° to 28°, and more preferably has a peak having a half width of 0.3° or more and 0.6° or less. The half width can be controlled by a method for producing the fibrous carbon or a heat treatment temperature. When the half width of the peak in the range is 1.0° or less, the graphitization degree is high. When the half width is 0.6° or less, a material having a higher graphitization degree and higher thermal conductivity is contained, so that the thermal conduction of the entire carbon fiber sheet is excellent. The narrower the half width of the peak in the range, the higher the graphitization degree, which is preferable, but the smaller the fiber diameter of the fibrous carbon, the lower the graphitization degree. Therefore, in a case where the fibrous carbon having a fiber diameter for forming the pores of 0.3 µm or more and 1.0 µm or less in the carbon fiber sheet adheres to the carbon fiber sheet, it is not easy to make the half width less than 0.3°, and thus, the lower limit is about 0.3°. The half width of the carbon fiber sheet can be calculated by measuring the X-ray diffraction pattern of the carbon fiber sheet using an X-ray diffractometer (D8 ADVANCE, manufactured by Bruker Corporation).

The fibrous carbon preferably has an aspect ratio of 10 or more, more preferably 10 or more and 400 or less, still more preferably 20 or more and 150 or less. When the aspect ratio is 10 or more, more preferably 20 or more, the pores of 0.3 µm or more and 1.0 µm or less are easily formed in the binding agent, and even a small amount of fibrous carbon can easily form a thermal conductive path in the binding agent, so that the thermal conductivity of the carbon fiber sheet can be enhanced. When the aspect ratio is more than 400, entangling of fibers of the fibrous carbon is likely to occur, which may result in an increase in viscosity of a liquid composition in which the fibrous carbon is dispersed in a solvent. When the aspect ratio is 150 or less, the viscosity can be kept low even if the concentration of the fibrous carbon in the liquid composition is high.

In a case where the carbon fiber sheet is prepared by being impregnated with a liquid composition having high viscosity, the fibrous carbon adheres to the outside of the carbon fiber sheet, and the amount of fibrous carbon adhering to the inside of the carbon fiber sheet is reduced, which makes it difficult for the fibrous carbon to adhere uniformly in the thickness direction of the carbon fiber sheet. If the fibrous carbon does not adhere uniformly in the thickness direction, some region in the carbon fiber sheet may have less thermal conductive paths, and the thermal conductivity of the entire carbon fiber sheet may be significantly lowered. Therefore, it is preferable that the fibrous carbon adheres uniformly in the thickness direction of the carbon fiber sheet.

The fiber diameter of the fibrous carbon is preferably 100 nm or more and 1 µm or less. When the fiber diameter is 100 nm or more, pores of 0.3 µm or more are easily formed in the binding agent. When the fiber diameter is less than 100 nm, the pores in the binding agent become smaller, and the gas diffusibility may be deteriorated. When the fiber diameter is 1 µm or less, the thermal conductive path can be formed with a small content, which makes it possible to improve the thermal conductivity while maintaining the gas diffusibility. The fiber diameter can be measured, for example, by magnifying and observing the fibrous carbon using SEM. The fiber diameter is an average value determined by randomly selecting 30 different fibers of the fibrous carbon in a captured SEM photograph of the fibrous carbon and measuring their diameters orthogonal to the fiber length. For the aspect ratio, the fiber length is similarly obtained by randomly selecting 30 different fibers of the fibrous carbon in a captured SEM photograph of the fibrous carbon, measuring their fiber lengths, and determining their average value, and the fiber length with respect to the fiber diameter is taken as the aspect ratio.

The carbon fiber sheet of the present invention preferably contains 25 mass% or more, more preferably 40 mass% or more of the fibrous carbon in 100 mass% of the carbon fiber sheet. As the upper limit, the carbon fiber sheet preferably contains 60 mass% or less of the fibrous carbon in 100 mass% of the carbon fiber sheet. When 25 mass% or more, preferably 40 mass% or more of the fibrous carbon is contained in the carbon fiber sheet, the pore size of 0.3 µm or more and 1.0 µm or less can be formed in the carbon fiber sheet. When the fibrous carbon is 60 mass% or less in the carbon fiber sheet, the volume of the pores of 20 µm or more and 100 µm or less can be sufficiently secured, and high drainage performance and gas diffusibility are obtained. In a case where a method for producing the carbon fiber sheet includes a heat treatment step, the carbon fiber sheet after the heat treatment step preferably satisfies the above range.

### <Method for Producing Carbon Fiber Sheet>

Hereinafter, the method for producing the carbon fiber sheet of the present invention will be exemplified, but the carbon fiber sheet of the present invention is not limited by the following production method.

The method for producing the carbon fiber sheet of the present invention preferably includes: an impregnation step of impregnating the carbon fiber structure with the liquid composition containing at least the resin and the fibrous carbon; a shaping step of controlling the thickness of the carbon fiber sheet by hot pressing; and a heat treatment step of melting the resin contained in the liquid composition with which the carbon fiber structure is impregnated in the impregnation step.

### [Impregnation Step]

The method for producing the carbon fiber sheet of the present invention preferably includes a step of forming the carbon fibers into the carbon fiber structure having a certain shape such as a paper material and then impregnating the carbon fiber structure with the liquid composition containing the resin and the fibrous carbon.

Examples of the method for impregnation with the liquid composition include a method of dipping into the liquid composition, and a method of coating with the liquid composition. In the case of coating, the amount of resin and fibrous carbon contained in the liquid composition tends to be large on the coating surface side and small on the other surface side. After coating, the resin can be melted and moved to some extent from the coating surface side to the other surface side by using a heating treatment such as hot pressing. However, the fibrous carbon does not melt even when heated, and thus is difficult to move, and it may be difficult to make the fibrous carbon uniformly present in the entire carbon fiber sheet. Therefore, the method of dipping the carbon fiber sheet in the liquid composition is particularly preferably used because the fibrous carbon can be made uniformly present from both the surfaces to the inside of the carbon fiber sheet, and the method provides excellent productivity. In a case where a fluoropolymer is used as the resin, the viscosity of the liquid composition can be reduced by using a fluoropolymer fine particle dispersion liquid as a fluoropolymer source of the liquid composition, and the viscosity of the liquid composition is less likely to increase even when the fibrous carbon is mixed at a high concentration, which is preferable. When the liquid composition has low viscosity, it is possible to adhere a sufficient amount of fibrous carbon to the inside of the carbon fiber sheet for securing the thermal conductivity by one impregnation.

The amount of fibrous carbon adhering to the carbon fiber sheet can be controlled by adjusting the content of the fibrous carbon in the liquid composition.

The impregnation step is preferably performed before the shaping step described below. Since the carbon fiber sheet before shaping has low density, the resin and the fibrous carbon easily adhere to the inside of the carbon fiber sheet when the carbon fiber sheet is dipped in the liquid composition.

### [Shaping Step]

The method for producing the carbon fiber sheet of the present invention preferably includes, after the impregnation step described above and before the heat treatment step described later, the shaping step of heating and pressurizing the carbon fiber structure impregnated with the liquid composition at a temperature of 100°C or more. By this shaping step, the thickness and porosity of the resulting carbon fiber sheet can be more accurately controlled, and the resin on the surface of the carbon fiber sheet is pressurized while partially melting, so that the surface of the carbon fiber sheet is smoothed. In sandwiching an electrolyte membrane between the carbon fiber sheets for assembling a fuel cell, the binding agent containing the resin and the fibrous carbon may break through the electrolyte membrane as a protrusion to cause an electric short-circuit. This electric short-circuit can be considerably suppressed by smoothing the surface of the carbon fiber sheet. In the shaping step, the heating temperature is preferably 100 to 250°C. In addition, the applied pressure is preferably 0.01 to 5 MPa.

### [Heat Treatment Step]

The carbon fiber sheet dipped in the liquid composition containing the resin and the fibrous carbon and subjected to the shaping step as necessary is then subjected to the heat treatment step. The heat treatment temperature in the heat treatment step is preferably 300°C or more and 400°C or less. By performing the heat treatment at a temperature of 300°C or more, the resin contained in the liquid composition with which the carbon fiber sheet is impregnated melts to wet-spread. When the temperature is 400°C or less, a large-scale heating furnace is unnecessary, and the production cost of the carbon fiber sheet can be significantly reduced.

Usually, the content of the fibrous carbon is hardly reduced in the heat treatment step, whereas the content of the resin is greatly reduced in the heat treatment step. Therefore, the content of the resin in the carbon fiber sheet after the heat treatment step can be controlled by determining the content of the resin in the liquid composition in consideration of the reduction of the resin due to the heat treatment. Since the degree of reduction of the resin in the heat treatment step varies depending on the heat treatment conditions, the content of the resin in the liquid composition is appropriately adjusted in accordance with the heat treatment conditions.

### [Water Repellent Step]

The method may include a step of subjecting the carbon fiber sheet to a water repellent treatment using a water repellent treatment liquid in which a water repellent material containing a fluoropolymer is dispersed.

Examples of the method of the water repellent treatment include a method in which the carbon fiber sheet is dipped in, for example, the water repellent treatment liquid and a method in which the carbon fiber sheet is coated with the water repellent treatment liquid by die coating or the like. The method in which the carbon fiber sheet is dipped in the water repellent treatment liquid is preferable from the viewpoint of distributing the fluoropolymer uniformly in the through-plane direction in the carbon fiber sheet. After the water repellent treatment, it is preferable to perform a step of heating and drying or a step of sintering.

However, if the water repellent treatment is performed after forming the binding agent having pores, the water repellent material adheres to cover the pores already formed, blocking the pores, and resulting in a deterioration in gas diffusibility. Therefore, it is preferable to adhere the water repellent material in the above impregnation step.

### <Method for Producing Carbon Fiber Sheet Having Microporous Layer>

### [Coating Step]

The carbon fiber sheet described above can be used as a gas diffusion electrode medium, but a microporous layer may be formed on one surface of the carbon fiber sheet and the product may be used as a gas diffusion electrode medium. The microporous layer is a porous layer usually containing a carbon powder and a water repellent material and having a pore size of 0.01 µm to 1 µm.

Examples of the carbon powder contained in the microporous layer include carbon black, graphite particles, carbon nanotubes, and carbon nanofibers. Among them, carbon black is preferably used.

As the water repellent material contained in the microporous layer, a fluoropolymer such as polytetrafluoroethylene (PTFE), a tetrafluoroethylene-hexafluoropropylene copolymer (FEP), and a tetrafluoroethylene-perfluoroalkyl vinyl ether copolymer (PFA) is preferably used.

The areal weight of the microporous layer is not particularly limited, but is preferably within the range of 10 to 50 g/m², more preferably 14 to 30 g/m². When the areal weight of the microporous layer is 10 g/m² or more, more preferably 14 g/m² or more, one surface of the carbon fiber sheet can be covered with the microporous layer, and reverse diffusion of produced water is further promoted, so that drying of an electrolyte membrane can be further suppressed. When the areal weight of the microporous layer is 50 g/m² or less, more preferably 30 g/m² or less, the drainage performance is further improved, so that flooding can be further suppressed.

The microporous layer is obtained by coating the carbon fiber sheet with a coating liquid containing the above-described carbon powder and water repellent material. For the coating, a coating system such as screen printing, rotary screen printing, spraying, intaglio printing, gravure printing, die coating, bar coating, and blade coating can be employed. Then, preferably thereafter, drying is performed at a temperature of 80 to 180°C. Furthermore, after drying, it is preferable to melt the water repellent material by heating at a temperature of about 300 to 400°C, more preferably 340 to 390°C.

### [Membrane Electrode Assembly]

In the present invention, a membrane electrode assembly can be formed by bonding the above-described carbon fiber sheet or gas diffusion electrode medium to at least one surface of an electrolyte membrane having a catalyst layer on its both surfaces. In a case where the gas diffusion electrode medium provided with the microporous layer is used, the microporous layer of the gas diffusion electrode medium is preferably disposed on the catalyst layer side because reverse diffusion of produced water is more likely to occur, and also a contact area between the catalyst layer and the gas diffusion electrode medium is increased, so that contact electrical resistance can be reduced. As a catalyst used for the catalyst layer, platinum is usually used. As the electrolyte membrane, it is preferable to use a perfluorosulfonic acid-based polymer material having high protonic conductivity, oxidation resistance, and heat resistance.

### [Fuel Cell]

A fuel cell of the present invention includes the carbon fiber sheet or the gas diffusion electrode medium of the present invention. That is, the fuel cell of the present invention is a fuel cell having bipolar plates on both the sides of the membrane electrode assembly described above. That is, the fuel cell is constituted by disposing the bipolar plates on both the sides of the membrane electrode assembly described above. Usually, a plurality of such membrane electrode assemblies, each sandwiched between the bipolar plates from both the sides, are laminated to form a polymer electrolyte fuel cell. The catalyst layer is composed of a layer containing a solid polymer electrolyte and catalyst-supported carbon. The constitutions themselves of the above-mentioned fuel cell unit and fuel cell are well known.

The fuel cell of the present invention can be used as a power source for transportation equipment such as automobiles, ships, and railways.

In particular, in the case of being used as a power source of an automobile, use in a high-temperature condition is required. An operating temperature of a current fuel cell mounted on an automobile is usually 60 to 70°C, but a large radiator is used to dissipate heat generated by power generation. Since a radiator required for dissipating heat can be downsized by increasing the operation temperature to about 90°C, development of a fuel cell having an increased operation temperature has been actively promoted. In order to operate the fuel cell at a high temperature, it is necessary to prevent drying of the electrolyte, and thus it is preferable to use the carbon fiber sheet having enhanced thermal conductivity of the present invention that promotes heat radiation from the electrolyte membrane.

### EXAMPLES

The carbon fiber sheet of the present invention will now be specifically described by way of examples. The materials, the method for preparing and evaluating the carbon fiber sheet, and the battery performance evaluation method of the fuel cell that are used in the examples are described below.

### <Pore Size Distribution>

The carbon fiber sheet was cut into 6 cm² of 2 cm × 3 cm to prepare 5 measurement samples, and the peak of the pore size was determined from the average value of the pore size distributions obtained by measuring the samples at a measurement pressure in the range of 6 kPa to 123 MPa (pore size: 10 nm to 200 µm) by a mercury intrusion method. AutoPore 9520 manufactured by Shimadzu Corporation was used as a measuring apparatus. As for the peak of the pore size, a maximal point in a target region was defined as the peak of the region in a curve of a log differentiation graph of the pore volume distribution obtained by pore measurement with a mercury porosimeter.

The pore volume of the pore size of 0.3 µm to 1.0 µm was determined by subtracting the integrated pore volume of a pore size of 1.0 µm or more from the integrated pore volume of a pore size of 0.3 µm or more.

### <Areal Weight of Carbon Fiber Sheet>

As for the carbon fiber sheet, 10 test pieces each having a size of 10 cm × 10 cm were prepared, the masses of the test pieces were individually measured, and the average areal weight of the 10 test pieces was determined.

### <Thickness and Density of Carbon Fiber Sheet>

The thickness of the carbon fiber sheet was measured with a digital thickness meter "DIGIMICRO" manufactured by Nikon Corporation with a load of 0.15 MPa being applied to the carbon fiber sheet. In addition, the density was calculated from the areal weight of the carbon fiber sheet.

### <Thermal Resistance>

The carbon fiber sheet was cut into a circle with a diameter of 30 mm to prepare 10 test pieces, and each test piece was set in a thermal conductivity measuring apparatus (IE-1230, manufactured by Iwatsu Test Instruments Co., Ltd.), pressurized at 1.0 MPa, and measured for the thermal resistance (K/W). The thermal resistance multiplied by the area of the carbon fiber sheet was defined as the thermal resistance (K·cm²/W) in the through-plane direction of the carbon fiber sheet, and the average of the 10 test pieces was determined.

### <Half Width in X-Ray Diffraction Pattern>

The carbon fiber sheet was cut into a diameter of 47 mm to prepare a sample. An X-ray diffractometer (D8 ADVANCE, manufactured by Bruker Corporation) was used to measure the range of 15 to 40° at 0.02° intervals while rotating the sample stage at a speed of 30rpm, and a peak with maximum diffraction strength was obtained. The half width of this peak was used.

### <Decrease in Tensile Stress When Further Pulled by 0.2 mm after Breakage>

Tensile test mode in "Autograph (registered trademark)" AGS-X manufactured by Shimadzu Corporation was used to measure the tension characteristics of the carbon fiber sheet. A test piece of the carbon fiber sheet cut into a size of 15 cm in length and 1.5 cm in width was attached to two upper and lower sample attachment jigs attached to a tensile tester, and the carbon fiber sheet was pulled at a speed of 2 mm/min in the length direction to obtain a stress-displacement curve. The maximum stress in this curve was defined as a breaking point of the carbon fiber sheet, and a difference between a tensile stress at the breaking point and a tensile stress after further pulling the carbon fiber sheet by 0.2 mm immediately after breakage was measured. The tensile stress is calculated by dividing a tensile force by the width of the test piece. This measurement was performed 5 times by changing the test pieces, and the average value was used as the decrease in tensile stress when the carbon fiber sheet was further pulled by 0.2 mm after breakage.

### <Gas Diffusibility>

A gas/water vapor diffusion measuring apparatus (MVDP-200C) manufactured by Seika Corporation was used to feed a gas for which diffusibility was to be measured to one surface side (primary side) of the carbon fiber sheet, and a nitrogen gas to the other surface side (secondary side). Control was performed so that a pressure difference between the primary side and the secondary side was in the vicinity of 0 Pa (0 ± 3 Pa) (i.e., a state where the pressure difference hardly caused a gas flow, and only molecular diffusion caused a gas movement phenomenon), a gas concentration at the time of reaching equilibrium was measured with a gas concentration meter on the secondary side, and the value of the gas concentration (%) was defined as an index of the gas diffusibility in the thickness direction.

### <Power Generation Performance of Polymer Electrolyte Fuel Cell>

A catalyst paste was prepared by sequentially adding 1.00 g of platinum-supported carbon (manufactured by Tanaka Kikinzoku Kogyo K.K., platinum supporting amount: 50 mass%), 1.00 g of purified water, 8.00 g of "Nafion (registered trademark)" solution (manufactured by Aldrich, "Nafion (registered trademark)", 5.0 mass%), and 18.00 g of isopropyl alcohol (manufactured by NACALAI TESQUE, INC.).

Then, a "NAFLON (registered trademark)" PTFE tape "TOMBO (registered trademark)" No. 9001 (manufactured by NICHIAS Corporation) cut into 5 cm × 5 cm was coated with the obtained catalyst paste using a spray and dried at ordinary temperature to prepare a PTFE sheet equipped with a catalyst layer having a platinum amount of 0.3 mg/cm². Subsequently, a solid polymer electrolyte membrane "Nafion (registered trademark)" NRE-211CS (manufactured by DuPont) cut into 8 cm × 8 cm was sandwiched between 2 PTFE sheets equipped with a catalyst layer, the resulting product was pressed at a temperature of 130°C for 5 minutes while being pressurized at 5 MPa with a flat press machine, and thus the catalyst layers were transferred onto the electrolyte membrane. After pressing, the PTFE sheets were removed to prepare a catalyst layer-equipped electrolyte membrane.

Next, the catalyst layer-equipped electrolyte membrane was sandwiched between 2 pieces cut into 5 cm × 5 cm of the gas diffusion electrode medium prepared in each of the examples and comparative examples, the resulting product was pressed at a temperature of 130°C for 5 minutes while being pressurized at 3 MPa with a flat press machine, and thus a membrane electrode assembly was prepared.

The obtained membrane electrode assembly was incorporated into a single cell for fuel cell evaluation. Here, as a bipolar plate, a serpentine-type bipolar plate having one flow channel of 1.0 mm in each of channel width, channel depth and rib width was used. In addition, unpressurized hydrogen was supplied to the anode size and unpressurized air was supplied to the cathode side. The relative humidity was set to 30% on both the sides.

Measurements were performed as follows. The utilization rates of the hydrogen and oxygen in the air were set to 70 mol% and 40 mol%, respectively, and the temperature of the cell was set to 90°C. Under the above conditions, the output voltage at a current density of 1.9 A/cm² was measured and used as an index of the power generation performance.

### (Example 1)

Polyacrylonitrile-based carbon fibers "TORAYCA (registered trademark)" T300 manufactured by Toray Industries, Inc. were cut into a length of 7 mm, dispersed in water for papermaking, further dipped in a 10 mass% aqueous dispersion liquid of polyvinyl alcohol, and dried to obtain a long carbon fiber paper material having a carbon fiber areal weight of about 20 g/m², and the carbon fiber paper material was wound up into a roll.

A liquid composition was prepared by mixing an aqueous dispersion liquid of a PTFE resin ("POLYFLON (registered trademark)" PTFE dispersion D-210C, manufactured by Daikin Industries, Ltd.), vapor grown carbon fibers "VGCF (registered trademark)" (fibrous carbon, aspect ratio: 53, fiber diameter: 0.15 µm, manufactured by Resonac Corporation) as a fibrous carbon, a nonionic surfactant as a dispersant, and water in the ratio (mass ratio) of aqueous dispersion liquid of PTFE resin : fibrous carbon : dispersant : water = 7 : 13 : 4 : 76. The above carbon fiber paper material was cut into 10 cm × 10 cm, dipped in the liquid composition and pulled up, then squeezed with a mangle to remove an excessive liquid so that the fibrous carbon was 48 mass% and the resin was 17 mass% in 100 mass% of a carbon fiber sheet after a heat treatment, and then dried at a temperature of 100°C for 10 minutes.

Subsequently, the carbon fiber paper material after being dipped in the liquid composition was subjected to a heating and pressurizing treatment at 180°C for 5 minutes while being pressurized at 3 MPa with a flat press machine to obtain a carbon fiber sheet. A heat treatment was further performed at 360°C for 10 minutes to obtain the carbon fiber sheet. The results of measuring the obtained carbon fiber sheet by the above-mentioned various measurement methods are shown in Table 1.

### (Example 2)

A carbon fiber sheet was obtained in the same manner as in Example 1 except that the carbon fiber paper material was dipped in a liquid composition mixed in the ratio (mass ratio) of aqueous dispersion liquid of PTFE resin : fibrous carbon : dispersant : water = 4 : 7 : 2 : 87, and an excess liquid was removed with a mangle so that the fibrous carbon was 36 mass% and the resin was 13 mass% in 100 mass% of the carbon fiber sheet after the heat treatment.

### (Comparative Example 1)

A carbon fiber sheet was obtained in the same manner as in Example 1 except that a long carbon fiber paper material having a carbon fiber areal weight of about 30 g/m² was prepared, the carbon fiber paper material was dipped in a liquid composition mixed in the ratio (mass ratio) of aqueous dispersion liquid of PTFE resin : fibrous carbon : dispersant : water = 7 : 4 : 1 : 88, and an excess liquid was removed with a mangle so that the fibrous carbon was 22 mass% and the resin was 26 mass% in 100 mass% of the carbon fiber sheet after the heat treatment.

### (Comparative Example 2)

A carbon fiber sheet was obtained in the same manner as in Example 1 except that a CNT paste (fibrous carbon, aspect ratio: 500, fiber diameter: 0.02 µm, manufactured by Jiangsu Cnano Technology Co., Ltd.) was used instead of the vapor grown carbon fibers, the carbon fiber paper material was dipped in a liquid composition mixed in the ratio (mass ratio) of aqueous dispersion liquid of PTFE resin : fibrous carbon : dispersant : water = 4 : 7 : 2 : 87, dried and then dipped in the same liquid composition again, and an excess liquid was removed with a mangle so that the fibrous carbon was 49 mass% and the resin was 17 mass% in 100 mass% of the carbon fiber sheet after the heat treatment.

### (Comparative Example 3)

A carbon fiber sheet was obtained in the same manner as in Example 1 except that "DENKA BLACK (registered trademark)" (acetylene black, aspect ratio: 1, manufactured by Denka Company Limited) was used instead of the vapor grown carbon fibers, and an excess liquid was removed with a mangle so that the resin was 18 mass%.

### (Example 3)

A carbon fiber sheet was obtained in the same manner as in Example 1 except that the carbon fiber paper material was dipped in a liquid composition mixed in the ratio (mass ratio) of aqueous dispersion liquid of PTFE resin : fibrous carbon : dispersant : water = 4 : 4 : 1 : 91, and an excess liquid was removed with a mangle so that the fibrous carbon was 26 mass% and the resin was 17 mass% in 100 mass% of the carbon fiber sheet after the heat treatment.

### (Example 4)

A carbon fiber sheet was obtained in the same manner as in Example 1 except that the carbon fiber paper material was dipped in a liquid composition mixed in the ratio (mass ratio) of aqueous dispersion liquid of PTFE resin : fibrous carbon : dispersant : water = 3 : 17 : 5 : 75, and an excess liquid was removed with a mangle so that the fibrous carbon was 61 mass% and the resin was 7 mass% in 100 mass% of the carbon fiber sheet after the heat treatment.

### (Comparative Example 4)

A carbon fiber sheet was obtained in the same manner as in Example 1 except that carbon nanofibers (aspect ratio: 7, fiber diameter: 0.7 µm) were used as the fibrous carbon instead of the vapor grown carbon fibers, the carbon fiber paper material was dipped in a liquid composition mixed in the ratio (mass ratio) of aqueous dispersion liquid of PTFE resin : fibrous carbon : dispersant : water = 7 : 13 : 5 : 75, dried and then dipped in the same liquid composition again, and an excess liquid was removed with a mangle so that the fibrous carbon was 50 mass% and the resin was 16 mass% in 100 mass% of the carbon fiber sheet after the heat treatment.

**[Table 1-1]**

| | | | Unit | Example 1 | Example 2 | Example 3 | Example 4 |
|---|---|---|---|---|---|---|---|
| Configuration of carbon fiber sheet | Carbon material | Type | - | Fibrous carbon | Fibrous carbon | **Fibrous** carbon | Fibrous carbon |
| | | Aspect ratio | - | 53 | 53 | 53 | S3 |
| | | Fiber diameter | µm | 0.15 | 0.15 | 0.15 | 0.15 |
| | | Content | mass% | 48 | 36 | 26 | 61 |
| | Resin | Content | mass% | 17 | 13 | 17 | 7 |
| | Measurement results | Areal weight of carbon fiber sheet | g/m² | 59 | 39 | 35 | 61 |
| | | Density of carbon fiber sheet | g/cm³ | 0.29 | 0.26 | 0.25 | 0.32 |
| | | | µm | 203 | 150 | 140 | 191 |
| | | Peak position of pore size | µm | 0.5, 56 | **0.5,** 55 | 0.5, 55 | 0.6, 55 |
| | | Pore volume of pore size of 0.3 µm to 1.0 µm | mL/g | 0.58 | 0.43 | 0.16 | 0.70 |
| | | Half width in X-ray diffraction pattern | ° | 0.45 | 0.46 | 0.48 | 0.44 |
| | | Decrease in tensile stress immediately after breakage | N/cm | 2.2 | 2.8 | 3.1 | 8.3 |
| Evaluation results | | Thermal resistance | K ·cm⁻/W | 3.3 | 3.9 | 6.5 | 2.8 |
| | | Gas diffusibility | % | 32.1 | 31.8 | 30.6 | 32.3 |
| | | Power generation performance | v | 0.35 | 0.31 | 0.29 | 0.31 |

**[Table 1-2]**

| | | | Unit | Comparative Example 1 | Comparative Example 2 | Comparative Example 3 | Comparative Example 4 |
|---|---|---|---|---|---|---|---|
| Configuration of carbon fiber sheet | Carbon material | Type | - | Fibrous carbon | Fibrous carbon | Acetylene black | Fibrous carbon |
| | | Aspect ratio | - | 53 | 500 | 1 | 7 |
| | | Fiber diameter | µm | 0.15 | 0.02 | - | 0.7 |
| | | Content | mass% | 22 | 49 | 48 | 50 |
| | Resin | Content | mass% | 26 | 17 | 18 | 16 |
| | Measurement results | Areal weight of carbon fiber sheet | g/m² | 60 | 58 | 60 | 58 |
| | | Density of carbon fiber sheet | g/cm³ | 0.34 | 0.35 | 0.31 | 0.29 |
| | | | µm | 176 | 164 | 192 | 200 |
| | | Peak position of pore size | µm | 0.4, 55 | 0.02, 41 | 0.1, 37 | 1.4, 41 |
| | | Pore volume of pore size of 0.3 µm to 1.0 µm | mL/g | 0.08 | 0.06 | 0.29 | 0.26 |
| | | Half width in X-ray diffraction pattern | ° | 0.49 | 2.52 | 3.08 | 0.91 |
| | | Decrease in tensile stress immediately after breakage | N/cm | 3.3 | 4.5 | 3.1 | 9.5 |
| Evaluation results | | Thermal resistance | K·cm²/W | 7.8 | 8.2 | 10.6 | 7.2 |
| | | Gas diffusibility | % | 30.4 | 30.3 | 30.8 | 31.1 |
| | | Power generation performance | V | 0.25 | 0.25 | 0.24 | 0.22 |

### INDUSTRIAL APPLICABILITY

The carbon fiber sheet of the present invention and the gas diffusion electrode medium using the same can be suitably used for a fuel cell, particularly for a gas diffusion electrode of a polymer electrolyte fuel cell. In addition, the gas diffusion electrode medium using the carbon fiber sheet of the present invention achieves both thermal conductivity and gas diffusibility, and exhibits high gas diffusibility even in a high current density region while suppressing dry up of an electrolyte membrane, which makes it possible to produce a high-performance polymer electrolyte fuel cell.

## Claims

1. A carbon fiber sheet comprising a binding agent containing at least a resin and a fibrous carbon, and a carbon fiber structure bound with the binding agent, wherein
a content of the fibrous carbon is 25 mass% or more in 100 mass% of the carbon fiber sheet, and
a pore size distribution of the carbon fiber sheet has a peak between a pore size of 0.3 µm and 1.0 µm and a peak between a pore size of 20 µm and 100 µm.

2. A carbon fiber sheet comprising a binding agent containing at least a resin and a fibrous carbon, and a carbon fiber structure bound with the binding agent, wherein
a pore size distribution of the carbon fiber sheet has a peak between a pore size of 0.3 µm and 1.0 µm and a peak between a pore size of 20 µm and 100 µm, and
a pore volume of the pore size of 0.3 µm to 1.0 µm is 0.40 mL/g or more.

3. The carbon fiber sheet according to claim 1, wherein a pore volume of the pore size of 0.3 µm to 1.0 µm is 0.40 mL/g or more.

4. The carbon fiber sheet according to claim 1 or 2, wherein a content of the resin is 5 mass% or more and 25 mass% or less in 100 mass% of the carbon fiber sheet.

5. The carbon fiber sheet according to claim 1 or 2, wherein the content of the fibrous carbon is 40 mass% or more in 100 mass% of the carbon fiber sheet.

6. The carbon fiber sheet according to claim 1 or 2, wherein the fibrous carbon has an aspect ratio of 10 or more and 400 or less.

7. The carbon fiber sheet according to claim 1 or 2, wherein the fibrous carbon has a fiber diameter of 100 nm or more and 1 µm or less.

8. The carbon fiber sheet according to claim 1 or 2, wherein an X-ray diffraction pattern has a peak having a half width of 0.3° or more and 1.0° or less in a range of 25° to 28°.

9. The carbon fiber sheet according to claim 1 or 2, wherein a decrease in tensile stress when the carbon fiber sheet is further pulled by 0.2 mm after breakage is 1 N/cm or more and 6 N/cm or less.

10. The carbon fiber sheet according to claim 1 or 2, wherein the carbon fiber structure is a carbon fiber paper material.

11. The carbon fiber sheet according to claim 1 or 2, wherein the resin is a fluoropolymer.

12. A gas diffusion electrode medium comprising the carbon fiber sheet according to claim 1 or 2 and a microporous layer formed on one surface of the carbon fiber sheet.

13. A fuel cell comprising the carbon fiber sheet according to claim 1 or 2 as a gas diffusion electrode.

14. A fuel cell comprising the gas diffusion electrode medium according to claim 12 as a gas diffusion electrode.

15. Transportation equipment comprising the fuel cell according to claim 13 as a power source.

16. Transportation equipment comprising the fuel cell according to claim 14 as a power source.

17. A method for producing a carbon fiber sheet to produce the carbon fiber sheet according to claim 1 or 2, the method comprising:
a step of impregnating a carbon fiber structure with a liquid composition containing a resin and a fibrous carbon serving as a binding agent; and
a heat treatment step of melting the resin contained in the liquid composition with which the carbon fiber structure is impregnated in the impregnation step.
